# EUROPEAN PATENT APPLICATION

(11) **EP 2 520 532 A1**
(43) Date of publication of application: **07.11.2012**
(21) Application number: 09852829.2
(22) Date of filing: 29.12.2009
(51) Int. Cl.: B66C 15/04, G08G 1/0968, G06Q 50/00, B66C 23/88, B66C 23/46, B66C 23/687

(54) **SYSTEM FOR PREVENTING A COLLISION OF A CRANE, AND METHOD FOR CONTROLLING A CRANE**

(30) Priority: 28.12.2009 KR 20090132014
(71) Applicant: Adic Corporation, Ulju-gun, Ulsan 689-801 (KR); University Of Ulsan Foundation For Industry Cooperation, Ulsan 680-749 (KR)
(72) Inventor: CHUN, Jong Hyun, Ulju-gun Ulsan 689-791 (KR); JUNG, Jin Han, Ulsan 680-793 (KR); KIM, Young Nam, Ulsan 680-190 (KR); BYUN, Jae Wook, Ulsan 683-794 (KR); OH, Young Jin, Ulju-gun Ulsan 689-761 (KR); KIM, Jae Wook, Ulsan 681-762 (KR); CHOI, Ryul, Ulsan 680-812 Ulsan 680-100 (KR)
(74) Representative: Roos, Peter
(86) International application number: PCT/KR2009/007890
(87) International publication number: WO 2011/081227

(57) **Abstract**

Provided is a system for preventing a collision of a plurality of cranes, the system including: global positioning system (GPS) receivers respectively installed in the plurality of cranes, and obtaining and transmitting GPS coordinates by using a wireless communication network; and a local controller respectively installed in the plurality of cranes, and predicting a collision with a specific crane located within a range communicable through the wireless communication network from among the plurality of cranes, based on GPS coordinate received from the specific crane. Accordingly, since not only a collision risk between the cranes is remarkably decreased, but also the local controller only predicts a collision possibility with the specific crane existing within the communicable range of the wireless communication network, a configuration of the local controller may be simplified and a time taken to predict a collision is remarkably reduced. Moreover, even when some of local controllers malfunction, the collision may be predicted by using other normal local controllers, and thus the collision possibility between cranes may be decreased, thereby smoothing overall operations.

## Description

### CROSS-REFERENCE TO RELATED PATENT APPLICATION

This application claims the benefit of Korean Patent Application No. 10-2009-0132014, filed on December 28, 2009, in the Korean Intellectual Property Office, the disclosure of which is incorporated herein in its entirety by reference.

### BACKGROUND OF THE INVENTION

### 1. Field of the Invention

The present invention relates to a system for preventing a collision of a crane and method for controlling a crane, and more particularly, to an independent system for preventing a collision of a crane and method for controlling a crane.

### 2. Description of the Related Art

In current shipbuilding docks, various types of large cranes used for shipbuilding, such as goliath cranes, jib cranes, and tower cranes, operate while independently moving. The locations of tower cranes are fixed, but the goliath cranes and jib cranes may move to perform operations.

Accordingly, cranes may collide with each other due to carelessness of a driver. If the cranes collide, not only property is lost, the shipbuilding is stopped for a long time, and a delivery is delayed due to damage cranes, but also a crane operator or a ground operator may die in severe cases.

Accordingly, KR2009-0072329 discloses a technology of predicting a collision between cranes as a main management unit monitors relative locations of the cranes by using global positioning system (GPS) coordinates of entire cranes. However, when the main management unit does not operate, a possibility of collisions between the entire cranes cannot be predicted. Also, whenever a new crane is additionally installed, a database of the main management unit has to be updated, which consumes a lot of time.

### SUMMARY OF THE INVENTION

The present invention provides an independent system for preventing a collision of a crane and method for controlling a crane.

According to an aspect of the present invention, there is provided system for preventing a collision of a plurality of cranes, the system including: global positioning system (GPS) receivers respectively installed in the plurality of cranes, and obtaining and transmitting GPS coordinates by using a wireless communication network; and a local controller respectively installed in the plurality of cranes, and predicting a collision with a specific crane located within a range communicable through the wireless communication network from among the plurality of cranes, based on GPS coordinate received from the specific crane.

According to another aspect of the present invention, there is provided a method for controlling a crane to prevent a collision with an adjacently operating crane, the method including: receiving global positioning system (GPS) coordinates obtained via a differential GPS (DGPS) method from a specific crane located within a communicable range of a ubiquitous sensor network (USN); and controlling operations of the cranes by predicting the collision with the specific crane based on the received GPS coordinates.

### BRIEF DESCRIPTION OF THE DRAWINGS

The above and other features and advantages of the present invention will become more apparent by describing in detail exemplary embodiments thereof with reference to the attached drawings in which:

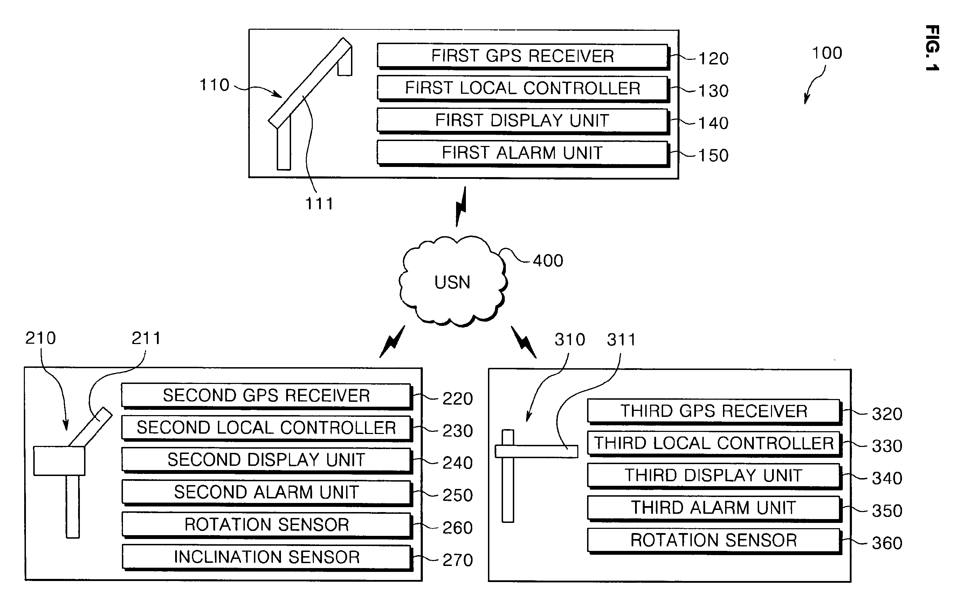

FIG. 1 is a schematic diagram of a system for preventing a collision of a crane, according to an embodiment of the present invention.

### DETAILED DESCRIPTION OF THE INVENTION

Hereinafter, the present invention will be described more fully with reference to the accompanying drawings, in which exemplary embodiments of the invention are shown.

FIG. 1 is a schematic diagram of a system 100 for preventing a collision of a crane, according to an embodiment of the present invention. The system 100 includes first through third global positioning system (GPS) receivers 120 through 320, first through third local controllers 130 through 330, first through third display units 140 through 340, and first through third alarm units 150 through 350.

First through third cranes 110 through 310 are disposed. The first crane 110 is a goliath crane, the second crane 210 is a jib crane, and the third crane 310 is a tower crane. However, alternatively, various cranes may be combined. For example, only several goliath cranes may be disposed, several cranes where goliath cranes and jib cranes are mixed may be disposed, or several cranes where goliath cranes, jib cranes, and tower cranes are mixed may be disposed. Generally, in a shipbuilding dock, suitable numbers of three types of cranes are disposed and operate together.

The first through third GPS receivers 120 through 320 are respectively installed in the first through third cranes 110 through 310. The first through third GPS receivers 120 through 320 respectively obtain GPS coordinates of the first through third cranes 110 through 310 by using a differential GPS (DGPS) method, and transmit the GPS coordinates of the first through third cranes 110 through 310 through a wireless communication network 400. However, alternatively, the GPS coordinates may be obtained by using a general GPS method, instead of the DGPS method. Any one of various communication network may be used as the wireless communication network 400, and in the current embodiment, the wireless communication network 400 is a ubiquitous sensor network (USN). A wireless communicable range of the USN is from about 100 m to about 150 m. In the USN, 2.4 GHz having excellent straightness or 433 MHz having excellent obstacle avoiding ability may be used. However, the wireless communication network may be a radio frequency (RF) network. Furthermore, the USN and the RF network may be simultaneously used.

The first through third local controllers 130 through 330 predict a collision between the cranes based on the GPS coordinates. For example, when the second GPS receiver 220 of the second crane 210 exists within a communication network usable range, the first local controller 130 receives the GPS coordinates of the second crane 210 from the second GPS receiver 220. The first local controller 130 may predict a collision with the second crane 210 by substituting the GPS coordinates of the crane where the first local controller 130 is installed (i.e., the first crane 110) and the GPS coordinates of the second crane 210 for a pre-stored 3 dimensional (3D) model, which will now be described in detail.

Information about the first through third cranes 110 through 310 is stored in the first through third local controllers 130 through 330. Based on such information, the first through third local controllers 130 through 330 may realize spatial locations of the first through third cranes 110 through 310 in a 3D model shape. For example, heights of a pair of pillars supporting two sides of a width support block 111 of the first crane 110, and a length of the width support block 111 installed to the pillars are pre-stored in the first local controller 130. Accordingly, when the GPS coordinates are substituted for on a specific reference point of the first crane 110, an actual location of the first crane 110 having the current size, configuration, and shape may be represented with a 3D model shape that will be used as a reference material for predicting a collision of the first crane 110. The 3D model shape is displayed on the first display unit 140 so as to remarkably increase operation convenience of a driver of the first crane 110. The same principles are applied to the second and third cranes 210 and 310. Also, only one GPS receiver is installed in each of the first through third cranes 110 through 310, but the present invention is not limited thereto. In other words, a plurality of GPS receivers may be installed in each of the first through third cranes 110 through 310 so as to clearly determine current locations of each element of the first through third cranes 110 through 310. Accordingly, a collision between cranes may be more accurately predicted.

Alternatively, accuracy of a collision prediction may be increased without having to increase the installed number of GPS receivers. Here, a rotation sensor 260 and an inclination sensor 270 are installed to a jib crane boom 211 corresponding to a crane boom of the second crane 210. Also, a rotation sensor 360 is installed to a tower crane boom 311 corresponding to a crane boom of the third crane 310. The first crane 110 moves along a goliath rail (not shown), but does not include a separate crane boom, and thus only the GPS coordinates of the first crane 110 from the first GPS receiver 120 is required. However, since the second crane 210 moves along a jib rail (not shown) while the jib crane boom 211 rotates up and down or right and left, not only the GPS coordinates, but also the rotation sensor 260 and the inclination sensor 270 are further required. The rotation sensor 260 and the inclination sensor 270 respectively detect a rotation angle and inclination of the jib crane boom 211, and externally transmit the rotation angle and the inclination by using the wireless communication network 400.

A location of the third crane 310 is fixed without a separate rail, but the tower crane boom 311 rotates right and left, and thus not only the GPS coordinates, but also the rotation sensor 360 are further required. The rotation sensor 360 detects a rotation angle of the tower crane boom 311, and externally transmits information about the detected rotation angle to the wireless communication network 400.

Since the first through third local controllers 130 through 330 are able to further use information detected by the rotation sensors 260 and 360 and the inclination sensor 270, a collision may be more accurately predicted.

In the 3D model, the first through third cranes 110 through 310 are 3D-modeled, the elements of the first through third cranes 110 through 310 are expressed in several connected segments, and then the shortest distance of each segment forming each of the first through third cranes 110 through 310 is analyzed, thereby predicting whether a corresponding crane is within a collisional distance. The 3D model may vary based on such principles, and an example is described in detail in KR2009-0072329. However, even in KR2009-0072329, a collision location and a collision direction of cranes are not determined even if a collision is predicted. However, in the present application elements of a crane are independently analyzed to determine a collision with elements of another crane. For example, when a goliath crane moves in a north-and-south direction, it is determined whether a collision is predicted in south or north. In a jib crane, not only a moving direction, but also an element (body, jib crane boom, or the like) where a collision may occur are determined. As such, since elements of cranes that may collide and a collision direction are determined, convenience of drivers is further improved.

If the first local controller 130 is outside the communication network usable range with the second or third GPS receiver 220 or 320, it is determined that the first local controller 130 does not have a possibility of colliding with the second and third cranes 210 and 310. The same details are applied to the second and third local controllers 230 and 330. As such, since the first through third local controllers 130 through 330 only predict a collision with a specific crane existing within a communicable range of the wireless communication network 400, configurations of the first through third local controllers 130 through 330 may be simplified, and a time consumed to predict a collision may be remarkably reduced. In addition, even when one or more of the first through local controllers 130 through 330 malfunction, a location controller that is normally operating can predict a collision, and thus a collision possibility between cranes is decreased, thereby smoothing overall operations. The collision possibility is determined whether the first through third cranes 110 through 310 move, and whenever the jib and tower crane booms 211 and 311 swing or move up and down.

The first through third local controllers 130 through 330 predicts a collision with the specific crane that is located to approach a crane where oneself is installed, as the crane moves or operates, but does not predict the collision with the specific crane that is located to recede. When cranes are densely installed in a narrow region, many cranes are communicable with the wireless communication network 400. In this case, a corresponding local controller has to continuously predict a collision with all communicable adjacent cranes. Thus, when a local controller predicts a collision only for cranes located in a moving or operating direction of a crane where oneself is installed, at least about 30% of time consumed to predict the collision may be reduced. For example, when a goliath crane moves north, only a collision with cranes located at north from among communicable cranes is predicted, and a collision with cranes located at south is not predicted.

Upon predicting a collision of the first crane 110 with the second crane 210 (or the third crane 310), the first local controller 130 notifies collision information to the driver of the first crane 110 by using a visual or acoustical method.

An example of the visual method includes displaying a collision message on the first display unit 140 installed in the first crane 110, and an example of the acoustic method includes generating a sound, such as a buzzer, by using the first alarm unit 150 installed in the first crane 110. Here, the first local controller 130 may also notify the collision information to the driver of the second crane 210.

However, the first local controller 130 may use the collision information by using a method different from above. In other words, the first local controller 130 may control the first crane 110 by using different methods according to a degree of collision risks (various factors, such as relative distances between cranes and collision possibilities). For example, when a degree of collision risks with the second crane 210 is low, the first local controller 130 may warn the driver visually or acoustically by using the first display unit 140 or the first alarm unit 150. At this time, the driver of the first crane 110 may manually notify the driver of the second crane 210 about a collision risk. When the degree of collision risks is medium, the first local controller 130 decelerates the first crane 110 by force. Lastly, when the degree of collision risks is high, the first crane 110 is stopped by force. As such, since the operation of the first crane 110 is controlled according to the degree of collision risks, operation stability of the first crane 110 is improved, and a collision risk is remarkably reduced.

During a cooperation mode, operation control of a corresponding crane by the first through third local controllers 130 through 330 is temporarily stopped. A cooperative operation is an operation performed by several cranes as the cranes cooperate with each other. If a crane is decelerated or stopped by force during the cooperative operation, another crane is affected accordingly, and thus a crane accident may rather occur. Accordingly, the cranes operating in the cooperation mode are not decelerated or stopped temporarily during the operation control according to the degree of collision risks. However, the present invention is not limited thereto, and the entire operation control may not be temporarily performed, or only stopping control may not be performed.

When distances between cooperating cranes reach a setup distance or above, the cooperation mode is automatically released, and the first through third local controllers 130 through 330 controls operations of the first through third cranes 110 through 310 according to scenarios determined according to the degree of collision risks. On the other hand, the cooperation mode may be realized manually by a driver.

Also, the first and second local controllers 130 and 230 may be interlocked with each other. In other words, the first through third cranes 110 through 310 may be prioritized, and only an operation of a crane having a relative low priority may be controlled. For example, assuming that the first crane 110 has a higher priority than the second crane 210, when the degree of collision risks between the first and second cranes 110 and 210 is low, the first and second local controllers 130 and 230 respectively warn the drivers visually or acoustically. On the other hand, when the degree of collision risks is medium, the first crane 110 operates as it is, whereas the second local controller 230 decelerates the second crane 210. On the other hand, when the degree of collision risks is high, the first crane 110 operates as it is, whereas the second local controller 230 stops the second crane 210 by force. In other words, according to the priority of the first through third cranes 110 through 310, operations of the first through third cranes 110 through 310 are controlled through various scenarios, thereby improving efficiency of entire operations.

According to the present invention, a system for preventing a collision of cranes, which not only reduces a collision possibility is reduced, but also has a simple configuration, is provided.

The system for preventing a collision of a crane and the method for controlling a crane according to the present invention have following effects.

First, a local controller installed in each crane independently detects adjacently operating specific cranes, by using a wireless communication network, and predicts a collision possibility with a corresponding crane, and thus a collision risk between cranes is remarkably decreased. Specifically, since the local controller only predicts a collision possibility with a specific crane existing within a communicable range of the wireless communication network, a configuration of the local controller may be simplified, and a time consumed to predict a collision is remarkably decreased.

Second, even when some of local controllers malfunction, a collision can be predicted by using a normally operating local controller, and thus a collision possibility between cranes is reduced, and overall operations are smoothened.

Third, a central control system for monitoring a collision between entire cranes is not required.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A system for preventing a collision of a plurality of cranes, the system comprising:
global positioning system (GPS) receivers respectively installed in the plurality of cranes, and obtaining and transmitting GPS coordinates by using a wireless communication network; and
a local controller respectively installed in the plurality of cranes, and predicting a collision with a specific crane located within a range communicable through the wireless communication network from among the plurality of cranes, based on GPS coordinate received from the specific crane.

2. The system of claim 1, wherein the wireless communication network is a ubiquitous sensor network (USN) or a radio frequency (RF) network.

3. The system of claim 1, wherein the GPS receives obtain the GPS coordinates by using a differential global positioning system (DGPS) method.

4. The system of claim 1, wherein, when the local controller predicts the collision with the specific crane, the local controller visually or acoustically notifies a collision risk.

5. The system of claim 1, wherein, when the local controller predicts the collision with the specific crane, the local controller controls a crane including the local controller by using different methods according to a degree of collision risks.

6. The system of claim 5, wherein the local controller sequentially performs issuing a visual or voice alarm, decelerating the crane, and stopping the crane as the degree of collision risks increases.

7. The system of any one of claims 1 through 6, wherein local controllers installed in cranes cooperating with each other from among the plurality of cranes perform a cooperation mode, wherein operation control of a corresponding crane is temporarily stopped, and release the cooperation mode when relative distances of the cooperating cranes increase by a setup distance or above.

8. The system of any one of claims 1 through 6, wherein the plurality of cranes comprise one or more types selected from among a goliath crane, a jib crane, and a tower crane.

9. The system of claim 8, wherein a jib crane boom constituting a crane boom of the jib crane comprises a rotation sensor and an inclination sensor, which respectively detect a rotating angle and inclination of the jib crane boom and transmit the detected values to other cranes through the wireless communication network,
a tower crane boom constituting a crane boom of the power crane comprises a rotation sensor that detects a rotating angle of the tower crane boom and transmits the detected value to other cranes through the wireless communication network, and
the local controller predicts the collision with the specific crane based on the GPS coordinates received from the specific crane, and the rotating angle and inclination of the jib crane boom, when the specific crane is the jib crane, and predicts the collision with the specific crane based on the GPS coordinates received from the specific crane and the rotating angle of the tower crane boom, when the specific crane is the tower crane.

10. The system of any one of claims 1 through 6, wherein the local controller predicts the collision with the specific crane that is located to approach the crane where the local controller is installed, as the crane moves or operates, and does not predict the collision with the specific crane that is located to recede.

11. A method for controlling a crane to prevent a collision with an adjacently operating crane, the method comprising:
receiving global positioning system (GPS) coordinates obtained via a differential GPS (DGPS) method from a specific crane located within a communicable range of a ubiquitous sensor network (USN); and
controlling operations of the cranes by predicting the collision with the specific crane based on the received GPS coordinates.
